# EUROPEAN PATENT SPECIFICATION

(11) **EP 1 127 853 B1**
(45) Date of publication and mention of the grant of the patent: **27.04.2005**
(21) Application number: 01103873.4
(22) Date of filing: 16.02.2001
(51) Int. Cl.: C03B 9/193, C03B 9/40

(54) **Method of molding hollow glass articles and molding machine implementing such a method**
Verfahren zur Herstellung von Hohlglaswaren und Maschine zur Ausführung dieses Verfahren
Procédé de fabrication d' objets creux en verre et machine pour appliquer ledit procédé

(30) Priority: 22.02.2000 IT TO000167
(43) Date of publication of application: 29.08.2001
(73) Proprietor: BOTTERO S.p.A., 12010 Cuneo (IT)
(72) Inventor: Sesia, Carlo, 12011 Borgo San Dalmazzo (IT); Borsarelli, Gianclaudio, 12100 Cuneo (IT); Viada, Bruno, 12010 Madonna delle Grazie (IT)
(74) Representative: Eccetto, Mauro

(56) References cited:
- EP-A- 0 327 240
- EP-A- 0 802 167
- WO-A-94/22776
- US-A- 4 662 923

## Description

The present invention relates to a method of molding hollow glass articles. Hollow glass articles, in particular bottles and vessels, are produced on so-called I.S. molding machines comprising a number of molding sections. Each molding section comprises a partable rough mold, in turn comprising a bottom wall, and two facing lateral walls movable with respect to each other to and from a closed position in which the lateral walls are forced against each other and define a cavity for receiving a respective gob of molten glass. Each gob of glass deposited inside the relative mold is first shaped using a plunger activated by a double-acting pneumatic actuator to move firstly towards the mouth of the mold cavity and then through the mouth to shape the glass inside the mold.

As the plunger contacts the glass gob, the kinetic energy stored by the plunger as it approaches the mouth is transmitted to the glass and therefore to the walls of the mold. And, since the approach speed is relatively high to minimize downtime, the kinetic energy of the plunger on contacting the glass is at times high enough to part the walls of the mold, thus resulting in overpress on the outer surface of the simifinished, and therefore also the finished, article. Moreover, on contacting the plunger and the mold walls, the mass of glass cools and is detached from the inner surface of the mold, thus resulting in random variations in shape.

The finished articles are therefore of relatively poor quality in terms of shape, size and surface finish, so that control of the plunger is required.

One control method is described, for example, in Patent EP-B-0 691 940, which employs a proportional solenoid valve controlled by a closed-loop-operating unit.

Closed-loop control, however, has the drawback of requiring extremely complex detecting, comparing and control units, which are expensive both to produce and assemble. What is more, the characteristics of the air in the two actuator chambers, and hence displacement of the plunger, are set by the same solenoid valve, so that each position of the movable member of the solenoid valve corresponds to a given constant ratio between the pressures in the two actuator chambers.

It is an object of the present invention to provide a method of molding hollow glass articles, designed to provide a straightforward, low-cost solution to the above problems by open-loop controlling of the plunger.

According to the present invention, there is provided a method of molding hollow glass articles in a mold using a plunger activated by a double-acting pneumatic actuator; the method comprising a first approach stage in which said plunger approaches said mold, and a second insertion stage in which said plunger is inserted inside said mold and inside a mass of glass in the mold; characterized in that, during at least one of said approach and insertion stages, the movement of said plunger is controlled by independently modulating a first and a second parameter of a first and, respectively, second air flow, fed into, respectively exhausted from, respective chambers of said pneumatic actuator, on the basis of a first and, respectively, second memorized reference time profile.

Preferably, the movement of said plunger is controlled by modulating said first and said second parameter during both the approach and insertion stage.

Conveniently, said first or said second reference time profile is used to modulate the flow rate of the air flow relative to one said chamber of said pneumatic actuator.

The present invention also relates to a machine for molding hollow glass articles.

According to the present invention, there is provided a machine for molding hollow glass articles, the machine comprising a mold for receiving a mass of glass for shaping; a double-acting pneumatic actuator; a plunger activated, in use, by said pneumatic actuator to approach said mold and to be inserted inside said mold and said mass of glass; and control means for controlling approach and insertion of said plunger characterized in that said control means comprise a first proportional flow-regulating solenoid valve and a second proportional pressure-regulating solenoid valve distinct from each other; and a control unit for controlling said first and said second solenoid valve according to a first and, respectively, second reference time profile, memorized and independent of each other, so as to modulate the flow rate of a first air flow exhausted from \ fed into one of the two chambers of said pneumatic actuator and, respectively, the pressure of a second air flow fed into \ exhausted from the other chamber of the pneumatic actuator.

A non-limiting embodiment of the invention will be described by way of example with reference to the accompanying drawings, in which:
Figure 1 shows, schematically, a preferred embodiment of the molding machine for implementing the method according to the present invention;
Figures 2 and 3 show two graphs relative to operation of the Figure 1 molding machine.

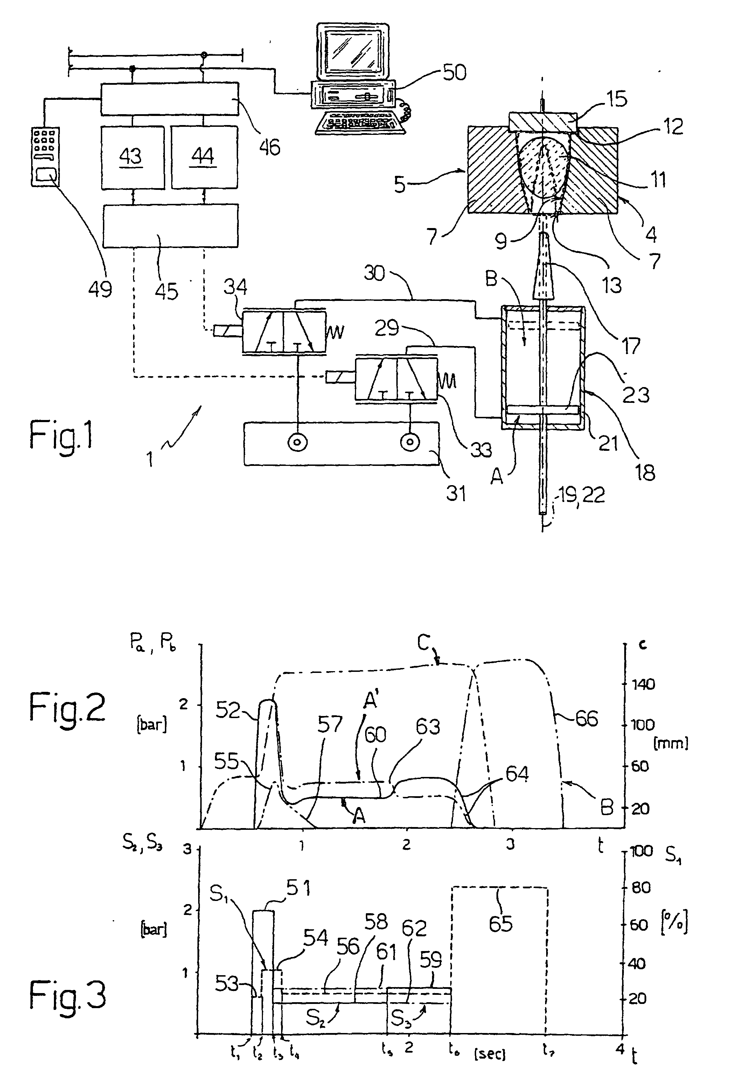

Number 1 in Figure 1 indicates as a whole a machine for molding hollow glass articles and comprising a number of sections, only one of which is shown schematically and indicated 4 in Figure 1. Section 4 in turn comprises a respective mold 5 for successively producing a number of semifinished glass articles from respective gobs of molten glass supplied by a dispensing device (not shown) and a conveying device (not shown) of machine 1.

With reference to Figure 1, mold 5 comprises two facing, hollow half-molds 7, which are forced releasably against each other by a pneumatic actuator (not shown), and partially define a cavity 9 for receiving a gob 11 of molten glass and having two opposite openings 12 and 13. Opening 12 defines the inlet through which gob 11 is fed by the conveying device, and is closed by a plug 15; and opening 13 defines a mouth for the insertion of a relative male plunger 17.

Plunger 17 is activated by a double-acting pneumatic linear actuator 18 to move, in a direction 19, between a withdrawn position (shown by the continuous line) and a forward position along a path comprising a first portion along which the plunger approaches mouth 13, and a second portion along which the plunger is inserted inside mold 5 and gob 11 to form a semifinished hollow glass article (not shown) from gob 11.

With reference to Figure 1, actuator 18 comprises a tubular jacket 21, which has an axis 22 coincident with direction 19 and is supported by a structure not shown; and a piston 23 housed in axially sliding and fluidtight manner inside jacket 21 and connected integrally to plunger 17. Together with jacket 21, piston 23 defines two variable-volume chambers A and B, which are supplied with air under pressure by an air supply unit 31 (shown schematically in Figure 1) to move plunger 17 axially forward and back respectively via respective pneumatic circuits 29 and 30 (shown schematically). Each pneumatic circuit 29, 30 comprises a proportional, three-way, continuously positioned pneumatic solenoid valve 33, 34 for regulating, in use, a respective air flow to and from respective chamber A, B.

At each production cycle, i.e. when molding each glass article, solenoid valves 33 and 34 are controlled according to respective independent signals or reference time profiles memorized in respective memory units 43 and 44, each relative to a respective solenoid valve 33, 34.

Memory units 43 and 44 are connected, on one side, to a control unit 45 for controlling solenoid valves 33 and 34 independently, and, on the other side, to a control unit 46 for controlling, timing and synchronizing section 4.

Unit 46 is connected to the other sections of machine 1 to transmit and receive respective molding process synchronizing signals, and is controlled from a push-button panel 49 forming part of section 4 and used, in particular, for starting and stopping section 4, and from a terminal 50 forming part of machine 1 and for entering and altering data relative to all the machine 1 sections.

In actual use, solenoid valves 33 and 34 each provide for time modulating a respective parameter of the respective intercepted air flow. Here and hereinafter, air flow "parameters" are intended to mean the flow rate Qa or pressure Pa of the air flow entering or leaving chamber A, and the flow rate Qb or pressure Pb of the air flow entering or leaving chamber B, while "modulate" is intended to mean a continuous or discrete variation in air pressure or flow rate at the various molding stages.

In the particular example shown, solenoid valve 33 is a pressure-regulating solenoid valve for varying the pressure Pa of the air flow entering chamber A, while solenoid valve 34 is a flow-regulating solenoid valve for varying the flow rate Qb of the air flow entering and leaving chamber B.

Preliminary tests are conducted to determine the reference time profiles by which to achieve a given modulation of the air flow parameters of chambers A and B, and hence a given law of motion of plunger 17 and given forces applied by plunger 17 to gob 11 and to mold 5, as a function of different types and quantities of glass in gob 11, and of different types of plunger 17.

Each memory unit 43, 44 stores a respective number of possible reference time profiles by which to control respective solenoid valve 33, 34 at each production cycle.

To perform a production cycle, the operator selects on terminal 50 two memorized reference time profiles, which are sent by unit 45 to respective solenoid valves 33, 34, and are repeated at subsequent production cycles pending further selection or changes in data.

Figures 2 and 3 show two graphs as a function of time "t" and relative to an example production cycle. Figure 2 shows test curves "A", "B" and "C" relative to pressure Pa, pressure Pb and the travel of plunger 17 respectively, and a test curve "A"' relative to pressure Pa and as an alternative to curve "A".

Figure 3 shows a step profile S1 by which unit 45 controls solenoid valve 34 to obtain curve "B" in Figure 2; and alternative step profiles S2 and S3 by which unit 45 can control solenoid valve 33 to obtain Figure 2 curves "A" and "A"' respectively. The y axes show, on one side, a pressure scale relative to profiles S2 and S3, and, on the other, a percentage scale, relative to profile S1, of the maximum opening through solenoid valve 34 between unit 31 and chamber B, and hence a percentage scale of maximum flow rate Qb.

Starting from a rest condition (shown by the continuous line in Figure 1) in which plunger 17 is in the withdrawn position and chambers A and B are discharged, the molding cycle comprises an approach stage in which, by means of a known return spring not shows, plunger 17 moves into an intermediate position between the limit positions and close to opening 13, and gob 11 is loaded into cavity 9. Once the gob is loaded, solenoid valves 33, 34 are activated at instant t1 (more specifically, t1 equals about 0.5 of a second) to move plunger 17 up to gob 11 as quickly as possible.

Solenoid valve 33 is opened between instants t1 and t3 to feed air under pressure to chamber A according to a step 51 in profile S2 and obtain a peak 52 in curve "A" and a maximum up speed for a relatively short period of time, while solenoid valve 34 is controlled to partly close the air flow passage from chamber B before plunger 17 contacts gob 11. More specifically, solenoid valve 34 is controlled according to a portion of profile S1 comprising a first step 53 between instant t1 and instant t2 (smaller than instant t3); and a second step 54, greater than step 53, between instant t2 and instant t4 (more specifically, t4 equals 0.8 of a second and is greater than instant t3). This adjustment provides for increasing pressure Pb along a portion 55 of curve "B" and so braking the up movement of plunger 17 to the extent of practically arresting plunger 17, the kinetic energy of which, on contacting gob 11, is such as to exert relatively little pressure on mold 5 and so prevent mold 5 from opening.

The approach stage is followed, at instant t4, by commencement of the pressing or insertion stage in which plunger 17 (as shown by the dash line in Figure 1) is inserted inside mold 5 at relatively low speed to shape and spread the glass completely inside mold 5.

Between instants t4 and t6 (t6=2.4 seconds), solenoid valve 34 is controlled according to a step 56, smaller than step 54, in profile S1 to discharge the air trapped inside chamber B and reduce pressure Pb along a relative portion 57 of curve "B", and to gradually subject the glass to the nominal pressing force determined by pressure Pa. Pressure Pa is modulated by solenoid valve 33 according to a portion of profile S2 comprising a step 58, smaller than step 51, between instants t3 and t5 (t5=1.8 seconds), and a step 59, greater than step 58, between instants t5 and t6, so as to modulate pressure Pa according to a rising portion 60 of curve "A".

Using profile S3 instead of S2, solenoid valve 33 is controlled, at the insertion stage, according to a portion comprising a step 61 between instants t3 and t5, and a step 62, smaller than step 61, between instants t5 and t6, so as to modulate pressure Pa according to a falling portion 63 of curve "A'" (Figure 2).

The variations in profiles S2 and S3, and therefore in pressure Pa, at the insertion or pressing stage provide for compensating shrinkage and the tendency of the glass to come away from mold 5 as a result of rapid cooling of the glass, or for preventing forcible opening of mold 5 and hence the formation of defects in the finished articles.

Once the glass article is molded, plunger 17 is lowered between instants t6 and t7 to permit transfer of the molded article. At this stage, solenoid valve 33 is deactivated to eliminate pressure Pa along the falling portion 64 of curve "A" or "A'" and discharge the air trapped inside chamber A, while solenoid valve 34 is activated and controlled according to a step 65 to increase flow rate Qb and hence pressure Pb along a portion 66 of curve "B" and so achieve an appropriate down speed of plunger 17.

In a variation not shown in the graphs, before plunger 17 is completely withdrawn, flow rate Qb and hence the withdrawal speed of plunger 17 may be reduced gradually according to a relative portion of profile S1 smaller than step 65, so as to cushion stoppage of piston 23.

Machine 1 therefore provides for open-loop controlling approach of plunger 17 towards mold 5, insertion of plunger 17 inside mold 5, and withdrawal of plunger 17.

Compared with closed-loop-control machines, machine 1 is relatively straightforward by employing no detecting units for determining air flow parameters at each production cycle - in particular, the pressures in chambers A and B, and the position and speed of plunger 17 - and no signal comparing and processing units.

Control unit 45 and independent solenoid valves 33, 34, controlled according to respective independent predetermined reference time profiles S2, S1, provide for time modulating the air flow parameters of chambers A and B independently and arbitrarily at each production cycle, and so effectively and easily controlling approach and insertion of plunger 17 to and inside mold 5.

The parameter modulation of even only one air flow relative to one of chambers A, B may be changed independently of that of the other chamber A, B by replacing one of the current profiles S1, S2 with another of the memorized reference time profiles, e.g. by substituting profile S3 for profile S2. Moreover, alongside changes in molding conditions during the production cycles, one or both of profiles S1, S2 sent to solenoid valves 33, 34 may be modified partially and independently of each other.

Moreover, since, in use, one of solenoid valves 33 and 34 modulates pressure Pa, and the other flow rate Qb, machine 1 provides for effectively controlling the force exerted by plunger 17 on the glass when molding the semifinished article, as well as the feed and withdrawal speed of plunger 17.

Clearly, changes may be made to machine 1 and the method described herein without, however, departing from the scope of the present invention.

In particular, solenoid valves 33, 34 may differ from the type described, e.g. may both modulate the pressure of the respective air flows.

The reference time profiles may differ from profiles S1, S2, S3 shown by way of example in Figure 3, so as to modulate the air flow parameters at each production cycle otherwise than as shown in Figure 2.

Finally, one of the flow parameters may only be modulated during part of the approach, insertion and lowering stages. For example, flow rate Qb may be modulated according to a portion of profile S1 between instants t2 and t3 only.

## Claims

1. A method of molding hollow glass articles in a mold (5) using a plunger (17) activated by a double-acting pneumatic actuator (18); the method comprising a first approach stage in which said plunger (17) approaches said mold (5), and a second insertion stage in which said plunger (17) is inserted inside said mold (5) and inside a mass of glass (11) in the mold (5); **characterized in that**, during at least one of said approach and insertion stages, the movement of said plunger (17) is controlled by independently modulating a first (Pb, Qb) and a second (Qa, Pa) parameter of a first and, respectively, second air flow, fed into, respectively exhausted from respective chambers (B) (A) of said pneumatic actuator (18), on the basis of a first (S1) and, respectively, second (S2; S3) memorized reference time profile.

2. A method as claimed in Claim 1, **characterized in that** the movement of said plunger (17) is controlled by modulating said first and said second parameter (Pb, QB) (Qa, Pa) during both the approach and insertion stage.

3. A method as claimed in Claim 1 or 2, **characterized in that** one (S1) of said first and second reference time profiles (S1) (S2; S3) is used to modulate the flow rate (Qb) of the air flow relative to one said chamber (B) of said pneumatic actuator (18).

4. A method as claimed in any one of the foregoing Claims, **characterized in that** one (S2; S3) of said first and second reference time profiles (S1) (S2; S3) is used to modulate the pressure (Pa) of the air flow relative to one said chamber (A) of said pneumatic actuator (18).

5. A method as claimed in any one of the foregoing Claims, **characterized in that**, during each said stage, at least one (S1)(S2; S3) of said first and second reference time profiles comprises a first and at least a second variation (53, 54) (58, 59; 61, 62) in the relative said parameter.

6. A method as claimed in any one of the foregoing Claims, **characterized in that** said first (Qb, Pb) and said second (Qa, Pa) parameter are modulated by controlling a first (34) and, respectively, a second (33) proportional solenoid valve, distinct from each other, according to said first (S1) and, respectively, said second (S2; S3) reference time profile.

7. A machine for molding hollow glass articles, the machine comprising a mold (5) for receiving a mass of glass (11) for shaping; a double-acting pneumatic actuator (18); a plunger (17) activated, in use, by said pneumatic actuator (18) to approach said mold (5) and to be inserted inside said mold (5) and said mass of glass (11); and control means (33, 34, 45) for controlling the approach of said plunger (17) to said mold (5) and the insertion of said plunger (17) inside said mold (5); **characterized in that** said control means (33, 34, 45) comprise a first proportional flow-regulating solenoid valve (34) and a second proportional pressure-regulating solenoid valve (33) distinct from each other; and a control unit (45) for controlling said first (34) and said second (33) solenoid valve according to a first (S1) and, respectively, second (S2; S3) reference time profile, memorized and independent of each other, so as to modulate the flow rate of a first air flow exhausted from \ fed into one (B) of the two chambers of said pneumatic actuator (18) and, respectively, the pressure (Pa) of a second air flow fed into \ exhausted from the other chamber (A) of the pneumatic actuator (18).

## Patentansprüche

1. Verfahren zum Gießen von Hohlglasgegenständen in einer Gussform (5) unter Verwendung eines Stempels (17), der durch einen Doppelwirkungs-Pneumatik-Aktuator (18) angetrieben wird, wobei das Verfahren eine erste Annäherungsphase, in welcher der Stempel (17) sich der Gussform (5) nähert, und eine zweite Eintauchphase aufweist, in welcher der Stempel (17) in die Gussform und in eine Glasmasse (11) in der Gussform (5) eintaucht, **dadurch gekennzeichnet, dass** zumindest während einer von der Annäherungs- und Eintauchphase die Bewegung des Stempels (17) durch ein unabhängiges Modulieren eines ersten (Pb, Qb) und eines zweiten (Qa, Pa) Parameters von einem ersten bzw. zweiten Luftstrom, der in eine jeweilige Kammer (B, A) des Pneumatik-Aktuators (18) eingeleitet bzw. aus dieser abgelassen wird, auf der Basis eines ersten (S1) bzw. eines zweiten (S2, S3) gespeicherten Referenzzeit-Profils gesteuert wird.

2. Verfahren nach Anspruch 1, **dadurch gekennzeichnet, dass** die Bewegung des Stempels (17) durch Modulieren des ersten und des zweiten Parameters (Pb, Qb) (Qa, Pa) während sowohl der Annäherungs- als auch der Eintauchphase gesteuert wird.

3. Verfahren nach Anspruch 1 oder 2, **dadurch gekennzeichnet, dass** das eine (S1) von dem ersten und zweiten Referenzzeit-Profil (S1) (S2, S3) verwendet wird, um die Flussrate (Qb) des Luftstroms relativ zu der einen Kammer (B) des Pneumatik-Aktuators (18) zu modulieren.

4. Verfahren nach einem der vorangegangenen Ansprüche, **dadurch gekennzeichnet, dass** das eine (S2, S3) von dem ersten und zweiten Referenzzeit-Profil (S1)(S2, S3) verwendet wird, um den Druck (Pa) des Luftstroms relativ zu der einen Kammer (A) des Pneumatik-Aktuators (18) zu modulieren.

5. Verfahren nach einem der vorangegangenen Ansprüche, **dadurch gekennzeichnet, dass** während jeder der Phasen zumindest eines (S1)(S2, S3) der ersten und zweiten Referenzzeit-Profile eine erste und zumindest eine zweite Variation (53, 54)(58, 59; 61, 62) des jeweiligen Parameters aufweist.

6. Verfahren nach einem der vorangegangenen Ansprüche, **dadurch gekennzeichnet, dass** der erste (Qb, Pb) und der zweite (Qa, Pa) Parameter durch Steuern eines ersten (34) bzw. eines zweiten (33) Proportional-Solenoid-Ventils entsprechend dem ersten (S1) bzw. dem zweiten (S2, S3) Referenzzeit-Profil verschieden voneinander moduliert werden.

7. Maschine zum Gießen von Hohlglasgegenständen, wobei die Maschine aufweist: eine Gussform (5) zum Aufnehmen einer Glasmasse (11) zum Formen, einen Doppelwirkungs-Pneumatik-Aktuator (18), einen Stempel (17), der bei Verwendung durch den Pneumatik-Aktuator (18) angetrieben wird, um sich der Gussform (5) anzunähern und um in die Gussform (5) und in die Glasmasse (11) einzutauchen, und Steuerungsmittel (33, 34, 45) zum Steuern der Annäherung des Stempels (17) an die Gussform (5) und des Eintauchens des Stempels (17) in die Gussform (5), **dadurch gekennzeichnet, dass** die Steuerungsmittel (33, 34, 45) ein erstes flussregelndes Proportional-Solenoid-Ventil (34) und ein zweites druckregelndes Proportional-Solenoid-Ventil (33), die voneinander verschieden sind, und eine Steuerungseinheit (45) zum Steuern des ersten (34) und des zweiten (33) Solenoidventils entsprechend einem ersten (S1) bzw. einem zweiten (S2, S3) Referenzzeit-Profil aufweist, die gespeichert und unabhängig voneinander sind, um die Flussrate eines ersten Luftstroms, der aus einer (B) der zwei Kammern des Pneumatik-Aktuators (18) abgelassen bzw. in eine (B) von diesen eingeleitet wird, bzw. den Druck (Pa) des zweiten Luftstroms zu modulieren, der in die andere Kammer (A) des Pneumatik-Aktuators (18) eingeleitet bzw. aus dieser abgelassen wird.

## Revendications

1. Procédé de moulage d'articles en verre creux dans un moule (5) en utilisant un poinçon-ébaucheur (17) activé par un actionneur pneumatique à double effet (18); le procédé comprenant une première étape d'approche dans laquelle ledit poinçon-ébaucheur (17) s'approche dudit moule (5), et une seconde étape d'insertion dans laquelle ledit poinçon-ébaucheur (17) est inséré à l'intérieur dudit moule (5) et dans une masse de verre (11) dans le moule (5); **caractérisé en ce que**, pendant au moins une desdites étapes d'approche et d'insertion, le mouvement du poinçon-ébaucheur (17) est commandé en modulant indépendamment un premier (Pb, Qb) et un second (Qa, Pa) paramètre d'un premier et, respectivement, d'un second flux d'air introduit dans des, respectivement aspiré de, chambres respectives (B) (A) dudit actionneur pneumatique (18), sur la base d'un premier (S1) et, respectivement, d'un second (S2; S3) profil de temps de référence mémorisé.

2. Procédé tel que revendiqué dans la revendication 1, **caractérisé en ce que** le mouvement dudit poinçon-ébaucheur (17) est commandé en modulant ledit premier et ledit second paramètre (Pb, Qb) (Qa, Pa) pendant à la fois l'approche et l'étape d'insertion.

3. Procédé tel que revendiqué dans la revendication 1 ou 2, **caractérisé en ce que** un (S1) desdits premier et second profils de temps de référence (S1) (S2; S3) est utilisé pour moduler le débit (Qb) du flux d'air relatif à une chambre (B) dudit actionneur pneumatique (18).

4. Procédé tel que revendiqué dans l'une quelconque des revendications précédentes, **caractérisé en ce que** un (S2; S3) desdits premier et second profils de temps de référence (S1) (S2; S3) est utilisé pour moduler la pression (Pa) du flux d'air relatif à une chambre (A) dudit actionneur pneumatique (18).

5. Procédé tel que revendiqué dans l'une quelconque des revendications précédentes, **caractérisé en ce que**, durant chaque étape, au moins un (S1) (S2; S3) desdits premier et second profils de temps de référence comprend une première et au moins une seconde variation (53, 54) (58, 59; 61, 62) dans ledit paramètre correspondant.

6. Procédé tel que revendiqué dans l'une quelconque des revendications précédentes, **caractérisé en ce que** ledit premier (Qb, Pb) et ledit second (Qa, Pa) paramètre sont modulés en commandant une première (34) et, respectivement, une seconde (33) électrovanne proportionnelle, distinctes l'une de l'autre, selon ledit premier (S1) et, respectivement, ledit second (S2; S3) profil de temps de référence.

7. Machine pour mouler des articles en verre creux, la machine comprenant un moule (5) pour recevoir une masse de verre (11) à former; un actionneur pneumatique à double effet (18), un poinçon-ébaucheur (17) activé, en utilisation, par ledit actionneur pneumatique (18) pour s'approcher dudit moule (5) et être inséré à l'intérieur dudit moule (5) et de ladite masse de verre (11); et des moyens de commande (33, 34, 45) pour commander l'approche dudit poinçon-ébaucheur (17) vers ledit moule (5) et l'insertion dudit poinçon-ébaucheur (17) à l'intérieur dudit moule (5); **caractérisée en ce que** lesdits moyens de commande (33, 34, 35) comprennent une première électrovanne proportionnelle (34) de régulation de flux et une seconde électrovanne proportionnelle (33) de régulation de flux, distinctes l'une de l'autre; et une unité de commande (45) pour commander ladite première (34) et ladite seconde (33) électrovanne selon un premier (s1) et, respectivement, un second (S2; S3) profil de temps de référence, mémorisés et indépendants l'un de l'autre, afin de moduler le débit d'un premier flux d'air aspiré de/ introduit dans une (B) des deux chambres dudit actionneur pneumatique (18) et, respectivement, la pression (Pa) d'un second flux d'air introduit dans/aspiré de l'autre chambre (A) de l'actionneur pneumatique (18).
